# EUROPÄISCHE PATENTSCHRIFT

(11) **EP 3 524 837 B1**
(45) Veröffentlichungstag und Bekanntmachung des Hinweises auf die Patenterteilung: **08.09.2021**
(21) Anmeldenummer: 18155819.8
(22) Anmeldetag: 08.02.2018
(51) Int. Cl.: F16C 19/26, F16H 57/08, F16C 19/46, F16C 33/66

(54) **KÄFIGLOSES VOLLROLLIGES WÄLZLAGER UND PLANETENGETRIEBE MIT EINEM DERARTIGEN WÄLZLAGER**
CAGE-FREE FULL TYPE ROLLER BEARING AND PLANETARY GEAR TRAIN HAVING SUCH A ROLLER BEARING
PALIER À ROULEMENT COMPLÉMENTAIRE SANS CAGE ET ENGRENAGE PLANÉTAIRE DOTÉ D'UN TEL PALIER À ROULEMENT

(43) Veröffentlichungstag der Anmeldung: 14.08.2019
(73) Patentinhaber: maxon international ag, 6072 Sachseln (CH)
(72) Erfinder: Lukic, Darko, 79108 Freiburg (DE); Klein, Olaf, 79312 Emmendingen (DE); Westholt, Stefan, 79350 Sexau (DE)
(74) Vertreter: Grünecker Patent- und Rechtsanwälte PartG mbB

(56) Entgegenhaltungen:
- CN-A- 1 360 161
- CN-U- 204 041 729
- DE-A1- 19 902 565
- DE-A1-102015 214 581
- DE-A1-102015 215 117
- JP-A- 2007 071 355
- US-A- 5 302 160
- US-B1- 6 875 111

## Beschreibung

Die vorliegende Erfindung betrifft ein vollrolliges Wälzlager gemäß Anspruch 1 sowie ein Planetengetriebe mit einem derartigen Wälzlager.

Die Erfindung geht von einem vollrolligen Wälzlager aus, das mehrere Wälzkörper, einen inneren Lagerkörper in Form einer Welle oder Achse mit zylindrischem Außendurchmesser, sowie einen konzentrisch dazu angeordneten äußeren Lagerkörper mit einer Innenbohrung aufweist. Alle Wälzkörper weisen denselben Außendurchmesser auf und sind derart zwischen dem inneren Lagerkörper und dem äußeren Lagerkörper angeordnet, dass die Wälzkörper auf dem Außendurchmesser des inneren Lagerkörpers und auf der Innenbohrung des äußeren Lagerkörpers abrollen, wodurch der äußere Lagerkörper relativ zum inneren Lagerkörper drehbar gelagert ist. Ein gattungsgemäßes vollrolliges Wälzlager ist zudem käfiglos ausgeführt.

Ein derartiges vollrolliges Wälzlager ist beispielsweise aus DE 10 2014 115227 A1 bekannt. Bei diesem Wälzlager ist eine Vielzahl von Wälzkörpern vorgesehen, die im Vergleich zu dem Außendurchmesser des inneren Lagerkörpers einen relativ geringen Außendurchmesser aufweisen. Ähnlich verhält es sich auch bei dem käfiglosen, vollrolligen Nadellager, das in DE 10 2000 9058811 A1 beschrieben ist. Diese Druckschrift schlägt vor, die Wälzkörper zur Verringerung der Reibung und zur Optimierung der Tragzahl so auszugestalten, dass zwei benachbarte Wälzkörper an sich kontaktierenden Oberflächen eine unterschiedliche Oberflächenbeschaffenheit aufweisen. Ein weiteres vollrolliges, käfigloses Wälzlager beschreibt auch die DE 10 2014 215967 A1. Auch bei diesem Lager ist eine Vielzahl von Wälzkörpern vorgesehen, die im Vergleich zu dem Außendurchmesser des inneren Lagerkörpers einen relativ geringen Außendurchmesser aufweisen. Die Druckschrift DE 4133443 A1 beschreibt ein vollrolliges Wälzlager, das nicht gattungsgemäß ausgeführt ist, da dieses Wälzlager einen Käfig aufweist. Das Lager ist so ausgelegt, dass eine Belastung eines oder mehrerer Käfigstege in entgegengesetzten Richtungen nicht möglich ist. Ein weiteres vollrolliges Wälzlager mit insgesamt sechs Wälzkörpern ist aus CN 204041729 U bekannt.

Aufgabe der vorliegenden Erfindung ist es, ein vollrolliges, käfigloses Wälzlager bereitszustellen, das für hohe Radiallasten geeignet ist und einen hohen Wirkungsgrad aufweist. Es ist ferner Aufgabe der vorliegenden Erfindung, das Wälzlager möglichst kompakt zu halten. Insbesondere soll sich das Wälzlager zur Lagerung von Planetenrädern besonders kompakter Planetengetriebe mit einem Durchmesser von weniger als 100 mm eignen. Das Wälzlager soll zudem einfach herzustellen sein und sich einfach dimensionieren lassen.

Die Aufgabe wird gelöst durch die Merkmale des unabhängigen Anspruchs 1. Demnach liegt bei einem vollrolligen Wälzlager der gattungsgemäßen Art dann eine erfindungsgemäße Lösung der Aufgabe vor, wenn das Wälzlager genau sechs Wälzkörper aufweist, wobei der Außendurchmesser der Wälzkörper dem Außendurchmesser des inneren Lagerkörpers entspricht, und wobei ein Durchmesser der Innenbohrung des äußeren Lagerkörpers zwischen 0,05 % und 1% größer ist als der dreifache Außendurchmesser des inneren Lagerkörpers.

Bei dem erfindungsgemäßen Wälzlager kann es sich sowohl um ein Rollenlager als auch um ein Nadellager handeln. Die Wälzkörper sind vorzugsweise einfache zylindrische Rollen oder Nadeln. Sie haben weiter vorzugsweise in etwa dieselbe axiale Länge wie die Innenbohrung des äußeren Lagerkörpers bzw. die zur Lagerung genutzte bzw. wirksame Länge des inneren Lagerkörpers.

Das erfindungsgemäße vollrollige Wälzlager lässt sich besonders einfach dimensionieren, da die Wälzkörper und der innere Lagerkörper denselben Außendurchmesser aufweisen. So kann der Durchmesser der Innenbohrung auf einfache Weise geringfügig größer als der dreifache Außendurchmesser des inneren Lagerkörpers bzw. der Wälzkörper dimensioniert werden, wodurch ein sehr geringes Spiel erreicht wird, welches verhindert, dass die Wälzkörper sich gegenseitig blockieren. Geometrisch ergibt sich bei dem erfindungsgemäßen Wälzlager, dass die Mittelpunkte bzw. geometrischen Achsen der Wälzkörper auf einem virtuellen Sechseck zu liegen kommen, dessen Mittelpunkt im Zentrum des inneren Lagerkörpers liegt, wobei die Ecken des virtuellen Sechsecks einen Abstand zum Mittelpunkt entsprechend dem Durchmesser eines Wälzkörpers aufweisen. Das erfindungsgemäße vollrollige Wälzlager ist zudem sehr einfach aufgebaut und kann daher äußerst kompakt hergestellt werden. Dabei ist es trotzdem zur Aufnahme hoher Radiallasten geeignet und weist darüber hinaus einen hohen Wirkungsgrad auf.

Vorteilhafte Ausführungsformen der vorliegenden Erfindung sind Gegenstand der Unteransprüche.

Gemäß einer bevorzugten Ausführungsform der vorliegenden Erfindung ist zur Reduzierung der Reibung ein Schmiermittel oder Öl in das Wälzlager eingebracht. Das Wälzlager ist dazu vorzugsweise gekapselt.

Gemäß einer weiteren bevorzugten Ausführungsform der vorliegenden Erfindung weist der innere Lagerkörper zumindest eine umlaufende Nut als Reservoir für das Schmiermittel oder Öl auf. Die Nutbreite ist dabei geringer als die axiale Länge der Wälzkörper und beträgt vorzugsweise maximal 50% der axialen Länge der Wälzkörper, so dass eine optimale Kraftübertragung zwischen dem inneren Lagerkörper und den Wälzkörpern gewährleistet bleibt. Es ist möglich, statt einer einzigen Nut mehrere Nuten des inneren Lagerkörpers vorzusehen. Beispielsweise können die Nuten als einfache ringförmige Nuten ausgeführt sein, die axial voneinander beanstandet sind.

Gemäß einer weiteren bevorzugten Ausführungsform der vorliegenden Erfindung beträgt die Tiefe der Nut maximal 15% des Außendurchmessers des inneren Lagerkörpers, vorzugsweise maximal 5% des Außendurchmessers des inneren Lagerkörpers. So wird eine ausreichende Stabilität des inneren Lagerkörpers gewährleistet.

Gemäß einer weiteren Ausführungsform der vorliegenden Erfindung ist die Nut ringförmig ausgebildet. Die Nut ist dabei vorzugsweise bezogen auf eine geometrische Achse der Wälzkörper axial mittig angeordnet. Dadurch wird eine gleichmäßige Abgabe des Schmiermittel bzw. Öls, und damit eine optimale Schmierung des Wälzlagers erreicht. Ferner werden bei dieser Ausführungsform auch die Radiallasten gleichmäßig auf den vorderen und hinteren Teil des inneren Lagerkörpers übertragen.

Gemäß einer alternativen Ausführungsform der vorliegenden Erfindung ist die Nut, bezogen auf eine geometrische Achse des inneren Lagerkörpers, schräg oder spiralförmig ausgeführt. Dadurch ergibt sich eine noch bessere bzw. gleichmäßigere Schmierung. Auch bei dieser Ausführungsform ist es denkbar, mehrere Nuten vorzusehen. Beispielsweise können die Nuten versetzt zueinander angeordnet sein wie die Gewindegänge eines mehrgängigen Gewindes.

Gemäß einer weiteren bevorzugten Ausführungsform der vorliegenden Erfindung bestehen die Wälzkörper und/oder der innere Lagerkörper und/oder der äußere Lagerkörper aus Metall oder Keramik. Insbesondere eine Zirkoniumoxid-Keramik eignet sich besonders gut zur Herstellung der genannten Bauteile. Weiter vorzugsweise kommen dabei offenporige Werkstoffe zum Einsatz, die mit einem Öl bzw. Gleitmittel getränkt werden können bzw. damit getränkt sind. Bevorzugt werden dazu Sinterwerkstoffe eingesetzt. Der Sinterwerkstoff wird vorzugsweise unter Verwendung eines grobkörnigen Granulats hergestellt. Dadurch wird eine besonders einfache und kostengünstige Herstellung mit homogen verteilten Poren möglich. Eine offenporige Struktur zur Aufnahme eines Öls bzw. Gleitmittels kann auch mittels Powder Injection Moulding aus Metall oder Keramik erzeugt werden. Anstatt der Verwendung eines grobkörnigen Granulats kann auch ein Platzhalterwerkstoff verwendet werden. Alternativ kann die offenporige Struktur auch aus einem Metallschaum, einem Keramikschaum oder einer Hohlkugelstruktur generiert werden. Auch ist es möglich, die Herstellung mittels selektivem Lasersintern, selektivem Laserschmelzen oder Elektronenstrahlschmelzen durchzuführen.

Sofern die Wälz- und/oder Lagerkörper aus Stahl bestehen, sind diese vorzugsweise mit einer sehr harten, reibungsoptimierten und somit verschleißmindernden diamantähnlichen Kohlenstoffschicht beschichtet, um die Lebensdauer des Wälzlagers zu erhöhen.

Gemäß einer weiteren bevorzugten Ausführungsform der vorliegenden Erfindung sind die Wälzkörper als Hülsen ausgeführt. Dadurch ergibt sich zum einen eine Gewichtsersparnis und zum anderen kann der Hohlraum innerhalb der Hülse als Schmierstoffreservoir dienen. Bei dieser Ausführungsform bestehen die Wälzkörper vorzugsweise aus Stahl, wobei die oben erwähnte Beschichtung mit einer Kohlenstoffschicht selbstverständlich vorgesehen sein kann.

Die vorliegende Erfindung stellt auch ein Planetengetriebe mit einem Planetenträger und zumindest einem drehbar am Planetenträger gelagerten Planetenrad bereit, wobei das Planetenrad mittels des zuvor beschriebenen erfindungsgemäßen vollrolligen Wälzlagers drehbar an dem Planetenträger gelagert ist.

Gemäß einer Ausführungsform des Planetengetriebes ist der innere Lagerkörper drehfest mit dem Planetenträger verbunden oder einstückig mit dem Planetenträger ausgeführt, wobei der äußere Lagerkörper drehfest mit dem Planetenrad ausgeführt oder durch das Planetenrad selbst gebildet ist. Bei dieser Ausführungsform bildet der innere Lagerkörper somit eine vom Planetenträger axial abstehende feststehende Achse.

Gemäß einer alternativen Ausführungsform des Planetengetriebes ist der innere Lagerkörper drehfest mit dem Planetenrad verbunden oder einstückig mit dem Planetenrad ausgeführt, wobei der äußere Lagerkörper drehfest mit dem Planetenträger ausgeführt oder durch den Planetenträger selbst gebildet ist. Ist letzteres der Fall, so ist die Innenbohrung des äußeren Lagerkörpers eine exzentrisch zur Achse des Planetenträgers in den Planetenträger eingebrachte Bohrung.

Gemäß einer weiteren bevorzugten Ausführungsform der vorliegenden Erfindung handelt es sich bei dem Planetengetriebe um ein kleinbauendes Planetengetriebe mit einem Durchmesser von maximal 100 mm. Es hat sich gezeigt, dass das erfindungsgemäße Wälzlager sehr gut bei derartigen kompaktbauenden Planetengetrieben eingesetzt werden kann. Vorzugsweise beträgt der Durchmesser des zumindest einen Planetenrads des Planetengetriebes maximal 40 mm. Selbstverständlich können, wie bei herkömmlichen Planetengetrieben üblich, mehrere Planetenräder pro Getriebestufe vorgesehen sein, die vorzugsweise gleichmäßig über den Umfang verteilt angeordnet sind.

Ausführungsbeispiele der vorliegenden Erfindung werden im Folgenden anhand von Zeichnungen näher erläutert.

Es zeigen:
- Figur 1: eine schematische Detailansicht eines Planetengetriebes mit einem Planetenrad, welches mittels eines erfindungsgemäßen vollrolligen Wälzlagers gemäß einem ersten Ausführungsbeispiel drehbar am zugehörigen Planetenträger gelagert ist, in einer Ansicht parallel zur Achse des Planetengetriebes,
- Figur 2: einen Längsschnitt durch das Planetengetriebe aus Figur 1,
- Figur3: einen Längsschnitt durch ein Planetengetriebe mit einem erfindungsgemäßen vollrolligen Wälzlager gemäß einem zweiten Ausführungsbeispiel,
- Figur 4: eine Detail-Schrägansicht des inneren Lagerkörpers der erfindungsgemäßen Wälzlager aus den Figuren 1 bis 3, und
- Figur 5: eine Detail-Schrägansicht des inneren Lagerkörpers aus Figur 4 gemäß einer Abwandlung.

Für die folgenden Ausführungen gilt, dass gleiche Teile durch gleiche Bezugszeichen bezeichnet sind. Sofern in einer Figur Bezugszeichen enthalten sind, auf die in der zugehörigen Figurenbeschreibung nicht näher eingegangen wird, so wird auf vorangehende oder nachfolgende Figurenbeschreibungen Bezug genommen.

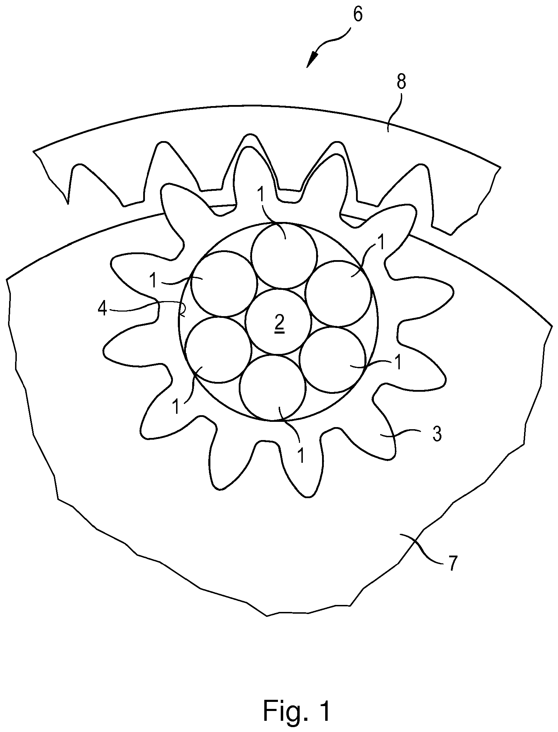

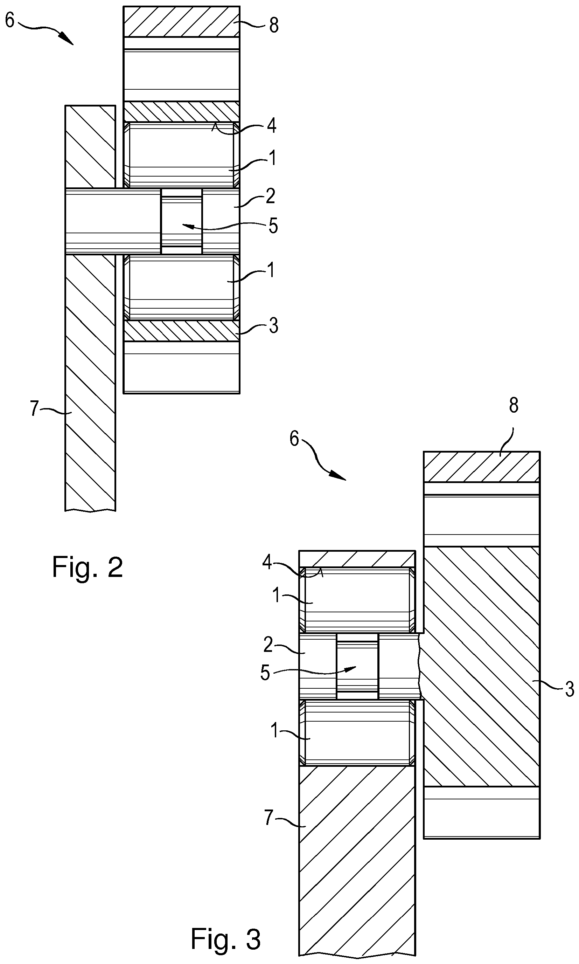

Die Figuren 1 und 2 zeigen, jeweils schematisch, ein Detail eines Planetengetriebes 6. Gezeigt sind ein Abschnitt eines Hohlrads 8 sowie ein Abschnitt des Planetenträgers 7 des Planetengetriebes 6. Ferner ist eines von mehreren gleichmäßig über den Umfang des Planetengetriebes verteilt angeordneten Planetenrädern 3 gezeigt, die jeweils mit einer Innenverzahnung des Hohlrads 8 kämmen.

Das Planetenrad 3 ist mittels eines erfindungsgemäßen vollrolligen Wälzlagers drehbar am Planetenträger gelagert. Das Wälzlager umfasst einen inneren Lagerkörper 2 in Form eines zylindrischen Bolzens, der fest mit dem Planetenträger 7 verbunden ist, sowie einen konzentrisch dazu angeordneten äußeren Lagerkörper, der mittels mehrerer Wälzkörper 1 relativ zum inneren Lagerkörper drehbar gelagert ist. Bei dem Ausführungsbeispiel gemäß den Figuren 1 und 2 bildet der innere Lagerkörper 2 somit eine feststehende Achse. Der äußere Lagerkörper wird durch das Planetenrad 3 selbst gebildet und weist eine Innenbohrung 4 auf. Die Wälzkörper 1 sind derart zwischen dem inneren Lagerkörper und dem äußeren Lagerkörper angeordnet, dass die Wälzkörper auf dem Außendurchmesser des inneren Lagerkörpers und auf der Innenbohrung des äußeren Lagerkörpers abrollen.

Gemäß der vorliegenden Erfindung sind genau sechs Wälzkörper vorgesehen. Der Außendurchmesser der Wälzkörper entspricht dem Außendurchmesser des inneren Lagerkörpers. Der Durchmesser der Innenbohrung 4 ist geringfügig größer als der dreifache Außendurchmesser des inneren Lagerkörpers bzw. der Wälzkörper, um zu verhindern, dass sich die Wälzkörper gegenseitig blockieren. Genauer gesagt ist der Durchmesser der Innenbohrung zwischen 0,05 % und 1% größer als der dreifache Außendurchmesser des inneren Lagerkörpers.

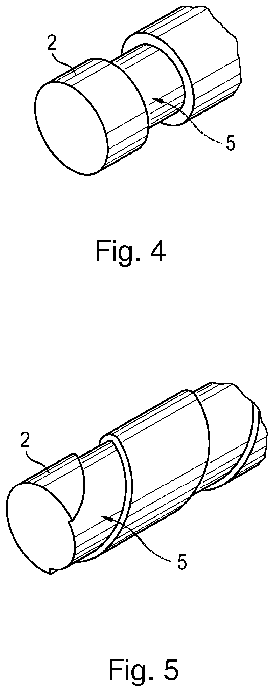

Wie in Figur 2 gezeigt ist, weist der innere Lagerkörper 2 eine ringförmige umlaufende Nut 5 auf, in die zur Reduzierung der Reibung ein Schmiermittel oder Öl eingebracht ist. Die umlaufende Nut dient somit als Reservoir für das Schmiermittel bzw. Öl. Die Tiefe der Nut beträgt maximal 15 % des Außendurchmessers des inneren Lagerkörpers. Sie ist, bezogen auf eine geometrische Achse der Wälzkörper, axial mittig angeordnet, um eine optimale Schmierung und Lastverteilung zu gewährleisten. Figur 4 zeigt eine Detail-Schrägansicht des inneren Lagerkörpers 2 mit der ringförmigen umlaufenden Nut 5. An dieser Stelle wird nochmals betont, dass die Zeichnungen lediglich schematischer Natur sind. Das Wälzlager ist vorzugsweise gekapselt, was in den Figuren ebenso nicht dargestellt ist wie eine notwendige axiale Sicherung der Wälzkörper bzw. des inneren Lagerkörpers.

In Figur 3 ist ein alternatives Ausführungsbeispiel gezeigt. Im Gegensatz zu dem Ausführungsbeispiel aus den Figuren 1 und 2 ist hier der innere Lagerkörper 2 nicht fest mit dem Planetenträger 7 sondern mit dem Planetenrad 3 verbunden bzw. einstückig mit dem Planetenrad 3 ausgeführt. Die Innenbohrung 4 befindet sich demnach im Planetenträger 7. Die Wälzkörper 1 sind zwischen dem Außendurchmesser des inneren Lagerkörpers und der Innenbohrung des Planetenträgers 7 angeordnet.

Figur 5 schließlich zeigt eine alternative Ausführung des inneren Lagerkörpers 2. Anstatt einer ringförmigen umlaufenden Nut ist bei dieser Ausführung eine spiralförmig verlaufende Nut 5 vorgesehen. Diese Ausführungsform erlaubt eine nochmals optimierte Schmierung zwischen dem inneren Lagerkörper und den Wälzkörpern.

Die Wälzkörper, der innere Lagerkörper und der äußere Lagerkörper bestehen bei sämtlichen Ausführungsbeispielen vorzugsweise aus Metall oder Keramik. Insbesondere eine Zirkoniumoxid-Keramik eignet sich besonders zur Herstellung der genannten Bauteile. Um die Schmierung zu verbessern, können die genannten Bauteile aus einem offenporigen Werkstoff bestehen, der mit einem Öl bzw. Gleitmittel getränkt ist. Sofern die Wälz- und/oder Lagerkörper aus Stahl bestehen, sind diese vorzugsweise mit einer sehr harten, reibungsoptimierten und somit verschleißmindernden diamantähnlichen Kohlenstoffschicht beschichtet, um die Lebensdauer des Wälzlagers zu erhöhen. Die Wälzkörper können ferner als Hülsen ausgeführt sein, um zum einen eine Gewichtsersparnis zu erzielen und zum anderen den Hohlraum innerhalb der Hülse als Schmierstoffreservoir nutzen zu können.

Bei dem gezeigten Planetengetriebe handelt es sich um ein kompaktes Planetengetriebe mit einem Durchmesser von maximal 100 mm. Der Durchmesser des gezeigten Planetenrads beträgt maximal 40 mm.

## Patentansprüche

1. Vollrolliges Wälzlager mit mehreren Wälzkörpern (1), einem inneren Lagerkörper (2) in Form einer Welle oder Achse mit zylindrischem Außendurchmesser, und einem konzentrisch dazu angeordneten äußeren Lagerkörper mit einer Innenbohrung (4), wobei alle Wälzkörper (1) denselben Außendurchmesser aufweisen und derart zwischen dem inneren Lagerkörper (2) und dem äußeren Lagerkörper angeordnet sind, dass die Wälzkörper (1) auf dem Außendurchmesser des inneren Lagerkörpers (2) und auf der Innenbohrung (4) des äußeren Lagerkörpers abrollen, wodurch der äußere Lagerkörper relativ zum inneren Lagerkörper (2) drehbar gelagert ist, wobei das Wälzlager käfiglos ausgeführt ist, wobei das Wälzlager genau sechs Wälzkörper (1) aufweist, **dadurch gekennzeichnet, dass** der Außendurchmesser der Wälzkörper (1) dem Außendurchmesser des inneren Lagerkörpers (2) entspricht, und dass ein Durchmesser der Innenbohrung (4) des äußeren Lagerkörpers zwischen 0,05% und 1% größer ist als der dreifache Außendurchmesser des inneren Lagerkörpers (2).

2. Vollrolliges Wälzlager nach Anspruch 1, **dadurch gekennzeichnet, dass** zur Reduzierung der Reibung ein Schmiermittel oder Öl in das Wälzlager eingebracht ist.

3. Vollrolliges Wälzlager nach Anspruch 2, **dadurch gekennzeichnet, dass** der innere Lagerkörper (2) zumindest eine umlaufende Nut (5) als Reservoir für das Schmiermittel oder Öl aufweist.

4. Vollrolliges Wälzlager nach Anspruch 3, **dadurch gekennzeichnet, dass** die Tiefe der Nut (5) maximal 15% des Außendurchmessers des inneren Lagerkörpers (2), vorzugsweise maximal 5% des Außendurchmessers des inneren Lagerkörpers (2), beträgt.

5. Vollrolliges Wälzlager nach Anspruch 3 oder 4, **dadurch gekennzeichnet, dass** die Nut (5) ringförmig ausgebildet und, bezogen auf eine geometrische Achse der Wälzkörper (1), axial mittig angeordnet ist.

6. Vollrolliges Wälzlager nach Anspruch 3 oder 4, **dadurch gekennzeichnet, dass** die Nut (5), bezogen auf eine geometrische Achse des inneren Lagerkörpers (2), schräg oder spiralförmig verläuft.

7. Vollrolliges Wälzlager nach einem der Ansprüche 1 bis 6, **dadurch gekennzeichnet, dass** die Wälzkörper (1) und/oder der innere Lagerkörper (2) und/oder der äußere Lagerkörper aus Metall oder Keramik, vorzugsweise aus einer Zirkoniumoxid-Keramik, bestehen.

8. Vollrolliges Wälzlager nach Anspruch 7, **dadurch gekennzeichnet, dass** die Wälzkörper (1) und/oder der innere Lagerkörper (2) und/oder der äußere Lagerkörper aus einem offenporigen öl- bzw. gleitmittelgetränkten Werkstoff bestehen.

9. Planetengetriebe (6) mit einem Planetenträger (7) und zumindest einem drehbar am Planetenträger gelagerten Planetenrad (3), **dadurch gekennzeichnet, dass** das Planentenrad mittels eines vollrolligen Wälzlagers gemäß einem der Ansprüche 1 bis 8 drehbar am Planetenträger gelagert ist.

10. Planetengetriebe (6) nach Anspruch 9, **dadurch gekennzeichnet, dass** der innere Lagerkörper (2) drehfest mit dem Planetenträger (7) verbunden oder einstückig mit dem Planetenträger (7) ausgeführt ist, wobei der äußere Lagerkörper drehfest mit dem Planetenrad (3) ausgeführt oder durch das Planetenrad (3) selbst gebildet ist.

11. Planetengetriebe (6) nach Anspruch 9, **dadurch gekennzeichnet, dass** der innere Lagerkörper (2) drehfest mit dem Planetenrad (3) verbunden oder einstückig mit dem Planetenrad (3) ausgeführt ist, wobei der äußere Lagerkörper drehfest mit dem Planetenträger (7) ausgeführt oder durch den Planetenträger (7) selbst gebildet ist.

12. Planetengetriebe (6) nach einem der Ansprüche 9 bis 11, **dadurch gekennzeichnet, dass** das Planetengetriebe ein kleinbauendes Planetengetriebe mit einem Durchmesser von maximal 100 mm ist.

13. Planetengetriebe (6) nach einem der Ansprüche 9 bis 12, **dadurch gekennzeichnet, dass** ein Durchmesser des zumindest einen Planetenrads (3) maximal 40 mm beträgt.

## Claims

1. A full-complement anti-friction bearing comprising a plurality of rolling elements (1), an inner bearing body (2) in the form of a shaft or an axle with a cylindrical outer diameter, and an outer bearing body arranged concentrically with the latter and having an inner bore (4), wherein all the rolling elements (1) have the same outer diameter and are arranged between the inner bearing body (2) and the outer bearing body in such a way that the rolling elements (1) roll on the outer diameter of the inner bearing body (2) and on the inner bore (4) of the outer bearing body, the outer bearing body being thus rotatably supported relative to the inner bearing body (2), wherein the anti-friction bearing is configured without a cage, wherein the anti-friction bearing has exactly six rolling elements (1), **characterized in that** the outer diameter of the rolling elements (1) is corresponding to the outer diameter of the inner bearing body (2), and **in that** a diameter of the inner bore (4) of the outer bearing body is between 0.05% and 1% larger than three times the outer diameter of the inner bearing body (2).

2. The full-complement anti-friction bearing according to claim 1, **characterized in that** a lubricant or oil is introduced in the anti-friction bearing so as to reduce the friction.

3. The full-complement anti-friction bearing according to claim 2, **characterized in that** the inner bearing body (2) has at least one circumferential groove (5) as a reservoir for the lubricant or the oil.

4. The full-complement anti-friction bearing according to claim 3, **characterized in that** the depth of the groove (5) amounts to a maximum of 15 % of the outer diameter of the inner bearing body (2), preferably to a maximum of 5% of the outer diameter of the inner bearing body (2).

5. The full-complement anti-friction bearing according to claim 3 or 4, **characterized in that** the groove (5) is annular in shape and axially centered in relation to a geometric axis of the rolling elements (1).

6. The full-complement anti-friction bearing according to claim 3 or 4, **characterized in that,** in relation to a geometric axis of the inner bearing body (2), the groove (5) extends at an oblique angle or spirally.

7. The full-complement anti-friction bearing according to one of the claims 1 to 6, **characterized in that** the rolling elements (1) and/or the inner bearing body (2) and/or the outer bearing body are made of metal or ceramic, preferably of zirconia ceramic.

8. The full-complement anti-friction bearing according to claim 7, **characterized in that** the rolling elements (1) and/or the inner bearing body (2) and/or the outer bearing body are made of an open-pored material impregnated with oil and a lubricant, respectively.

9. A planetary gearbox (6) comprising a planet carrier (7) and at least one planetary gear (3) rotatably supported on the planet carrier, **characterized in that** the planetary gear is rotatably supported on the planet carrier by means of a full-complement anti-friction bearing according to one of the claims 1 to 8.

10. The planetary gearbox (6) according to claim 9, **characterized in that** the inner bearing body (2) is non-rotatably connected to the planet carrier (7) or formed integrally with the planet carrier (7), the outer bearing body being configured such that it is non-rotatable relative to the planetary gear (3) or defined by the planetary gear (3) itself.

11. The planetary gearbox (6) according to claim 9, **characterized in that** the inner bearing body (2) is non-rotatably connected to the planetary gear (3) or formed integrally with the planetary gear (3), the outer bearing body being configured such that it is non-rotatable relative to the planet carrier (7) or defined by the planet carrier (7) itself.

12. The planetary gearbox (6) according to one of the claims 9 to 11, **characterized in that** the planetary gearbox is a small-size planetary gearbox having a maximum diameter of 100 mm.

13. The planetary gearbox (6) according to one of the claims 9 to 12, **characterized in that** a diameter of the at least one planetary gear (3) amounts to a maximum of 40 mm.

## Revendications

1. Palier à roulement à rouleaux jointifs comprenant plusieurs organes de roulement (1), un corps de palier intérieur (2) sous la forme d'un arbre ou d'un axe présentant un diamètre extérieur cylindrique, et un corps de palier extérieur agencé de manière concentrique par rapport à celui-ci et présentant un alésage intérieur (4), dans lequel tous les organes de roulement (1) présentent le même diamètre extérieur et sont agencés entre le corps de palier intérieur (2) et le corps de palier extérieur de telle manière que les organes de roulement (1) roulent sur le diamètre extérieur du corps de palier intérieur (2) et sur l'alésage intérieur (4) du corps de palier extérieur, grâce à quoi le corps de palier extérieur est monté de manière à pouvoir tourner par rapport au corps de palier intérieur (2), dans lequel le palier à roulement est réalisé sans cage, dans lequel palier à roulement présente exactement six organes de roulement (1), **caractérisé en ce que**
le diamètre extérieur des corps de palier (1) correspond au diamètre extérieur du corps de palier intérieur (2), et **en ce que**
le diamètre de l'alésage intérieur (4) du corps de palier extérieur est supérieur de 0,05 % à 1 % au triple du diamètre extérieur du corps de palier intérieur (2).

2. Palier à roulement à rouleaux jointifs selon la revendication 1, **caractérisé en ce qu'**un lubrifiant ou une huile est introduit(e) dans le palier à roulement afin de réduire le frottement.

3. Palier à roulement à rouleaux jointifs selon la revendication 2, **caractérisé en ce que** le corps de palier intérieur (2) présente au moins une rainure périphérique (5) faisant office de réservoir pour le lubrifiant ou l'huile.

4. Palier à roulement à rouleaux jointifs selon la revendication 3, **caractérisé en ce que** la profondeur de la rainure (5) représente au maximum 15% du diamètre extérieur du corps de palier intérieur (2), de manière préférée au maximum 5 % du diamètre extérieur du corps de palier intérieur (2).

5. Palier à roulement à rouleaux jointifs selon la revendication 3 ou 4, **caractérisé en ce que** la rainure (5) est de forme annulaire et est agencée de manière centrale et axiale par rapport à un axe géométrique des organes de roulement (1).

6. Palier à roulement à rouleaux jointifs selon la revendication 3 ou 4, **caractérisé en ce que** la rainure (5) s'étend en biais ou en spirale par rapport à un axe géométrique du corps de palier intérieur (2).

7. Palier à roulement à rouleaux jointifs selon l'une quelconque des revendications 1 à 6, **caractérisé en ce que** les organes de roulement (1) et/ou le corps de palier intérieur (2) et/ou le corps de palier extérieur (2) sont en métal ou en céramique, de manière préférée en une céramique à base d'oxyde de zirconium.

8. Palier à roulement à rouleaux jointifs selon la revendication 7, **caractérisé en ce que** les organes de roulement (1) et/ou le corps de palier intérieur (2) et/ou le corps de palier extérieur sont constitués d'un matériau à pores ouverts imprégné d'huile ou de lubrifiant.

9. Engrenage planétaire (6) avec un porte-satellites (7) et au moins un pignon satellite (3) monté de manière à pouvoir tourner au niveau du porte-satellites, **caractérisé en ce que** le pignon satellite est monté de manière à pouvoir tourner au niveau du porte-satellites au moyen d'un palier à roulement à rouleaux jointifs selon l'une quelconque des revendications 1 à 8.

10. Engrenage planétaire (6) selon la revendication 9, **caractérisé en ce que** le corps de palier intérieur (2) est relié de manière solidaire en rotation au porte-satellites (7) ou est réalisé d'un seul tenant avec le porte-satellites (7), dans lequel le corps de palier extérieur est réalisé de manière solidaire en rotation avec le pignon satellite (3) ou est formé par le pignon satellite (3) lui-même.

11. Engrenage planétaire (6) selon la revendication 9, **caractérisé en ce que** le corps de palier intérieur (2) est relié de manière solidaire en rotation avec le pignon satellite (3) ou est réalisé d'un seul tenant avec le pignon satellite (3), dans lequel le corps de palier extérieur est réalisé de manière solidaire en rotation avec le porte-satellites (7) ou est formé par le porte-satellites (7) lui-même.

12. Engrenage planétaire (6) selon l'une quelconque des revendications 9 à 11, **caractérisé en ce que** l'engrenage planétaire est un petit engrenage planétaire avec un diamètre d'au plus 100 mm.

13. Engrenage planétaire (6) selon l'une quelconque des revendications 9 à 12, **caractérisé en ce que** le diamètre du au moins un pignon satellite (3) est d'au plus 40 mm.
